# EUROPEAN PATENT SPECIFICATION

(11) **EP 3 251 974 B1**
(45) Date of publication and mention of the grant of the patent: **05.06.2019**
(21) Application number: 15909714.6
(22) Date of filing: 30.11.2015
(51) Int. Cl.: B65D 85/50, B32B 27/20, B65D 65/00, C08J 5/18

(54) **FOOD PACKAGING FILM**
LEBENSMITTELVERPACKUNGSFOLIE
FILM D'EMBALLAGE ALIMENTAIRE

(43) Date of publication of application: 06.12.2017
(73) Proprietor: Hitachi Chemical Company, Ltd., Chiyoda-ku Tokyo 100-6606 (JP)
(72) Inventor: MIYATA, Hiroyuki, Chikusei-shi Ibaraki 308-0861 (JP)
(74) Representative: Hoffmann Eitle
(86) International application number: PCT/JP2015/083645
(87) International publication number: WO 2017/094084

(56) References cited:
- WO-A1-2016/142447
- JP-A- 2002 012 686
- US-A- 4 042 549
- DATABASE WPI Week 201507 15 January 2015 (2015-01-15) Thomson Scientific, London, GB; AN 2015-05761P XP002778981, & JP 2015 007198 A (MITSUBISHI PLASTICS IND LTD) 15 January 2015 (2015-01-15)

## Description

### Technical Field

The present invention relates to an article comprising a box and a food wrapping film in the box.

### Background Art

Conventionally, food wrapping films have been widely used commercially in hotels, restaurants, and other such establishments, as well as in the home, during food storage, preparation, and the like. In recent years, a food wrapping film having a thermoplastic resin as a main component and further containing a colorant, such as a copper phthalocyanine colorant, has been proposed to make it easier to see visually whether a piece of the film has become mixed in the food (Patent Literature 1).

On the other hand, it is common to add an anti-fogging agent to the food wrapping film to prevent moisture in the food from adhering to the film as water droplets.

### Citation List

### Patent Literature

[Patent Literature 1] Japanese Unexamined Patent Publication No. 2015-7198

### Summary of Invention

### Technical Problem

According to investigations by the present inventors, it has been found that when a blue colorant is used together with an anti-fogging agent, the blue colorant does not uniformly disperse in the film, and the coloring of the film tends to become uneven.

Therefore, it is an object of the present invention to provide an article comprising a box and a food wrapping film, wherein the food wrapping film has excellent dispersibility of the blue colorant.

### Solution to Problem

The present invention provides an article comprising a box and a food wrapping film, wherein the food wrapping film consists of a single layer comprising a thermoplastic resin, a blue colorant, and a polyglycerol fatty acid ester.

The content of the polyglycerol fatty acid ester is preferably 0.5% by mass or more based on the total amount of the film.

### Advantageous Effects of Invention

According to the present invention, an article can be provided that includes a box and a food wrapping film, wherein the food wrapping film has excellent dispersibility of the blue colorant.

### Description of Embodiments

The film used in the present invention contains a thermoplastic resin, a blue colorant, and a polyglycerol fatty acid ester, and is used as a food wrapping film.

The thermoplastic resin may be a polyvinyl chloride resin, a polyethylene resin, a polypropylene resin, a polystyrene resin, a polyester resin, and the like. From the viewpoint of excellent dispersibility of the blue colorant, the thermoplastic resin is preferably a polyvinyl chloride resin.

From the viewpoint of excellent moldability, heat resistance, and fluidity of the film, the polyvinyl chloride resin preferably has an average polymerization degree of 700 to 1300. In the present invention, the term "average polymerization degree" means the average polymerization degree measured according to JIS K6720-2.

The polyvinyl chloride resin may be a vinyl chloride homopolymer, or may be a copolymer of a vinyl chloride and another monomer copolymerizable therewith. The copolymer may be a graft copolymer, a block copolymer, or a random copolymer. Examples of the other monomer include olefins such as ethylene, propylene, and polybutene, vinyl esters of saturated acids such as vinyl acetate and vinyl laurate, alkyl esters of unsaturated acids such as methyl acrylate and methyl methacrylate, alkyl vinyl ethers such as lauryl vinyl ether, maleic acid, acrylonitrile, styrene, methylstyrene, vinylidene chloride, and vinylidene fluoride. When the polyvinyl chloride resin is a copolymer, the content of the vinyl chloride unit in the copolymer may be 10% by mass or more based on the total amount of monomer units.

Examples of the polyvinyl chloride resin include a polymer blend with a three-dimensional polymer of acrylonitrile-butadiene-styrene, a post-treatment product of a polyvinyl chloride resin with an alcohol, and a post-treatment product of a polyvinyl chloride resin with a chlorine-containing compound. In these cases, the content of the vinyl chloride unit in the polyvinyl chloride resin may be 10% by mass or more based on the total amount of the resin.

When the thermoplastic resin is a polyvinyl chloride resin, the film may further contain a plasticizer. Examples of the plasticizer include epoxidized oils such as epoxidized linseed oil, epoxidized soybean oil, and epoxidized fatty acid alkyl esters, adipic acid esters having a linear or branched alkyl group having 6 to 10 carbon atoms, hydroxy polycarboxylic acid esters such as tributyl acetylcitrate and acetylated triethyl, fatty acid group dibasic acid esters such as di-normal butyl sebacate, glycol esters such as pentaerythritol ester and diethylene glycol benzoate, phosphoric acid esters such as triphenyl phosphate and tricresyl phosphate, glycerin diacetomonolaurate, chlorinated paraffin, and polyester-based plasticizers. These plasticizers are used singly or in combination of two or more kinds. The content of the plasticizer is appropriately adjusted in the range of, for example, 20 to 50 parts by mass with respect to 100 parts by mass of the polyvinyl chloride resin depending on applications including the type of food to be packaged, the wrapping form, and the wrapping method.

The polyethylene resin may be a copolymer having monomer units such as low density polyethylene, linear low density polyethylene, linear ultra low density polyethylene, medium density polyethylene, high density polyethylene, and ethylene. Specifically, the polyethylene resin may be a copolymer of ethylene and one or two or more species selected from α-olefins having 3 to 10 carbon atoms such as propylene, 1-butene, 1-pentene, 1-hexene, 4-methyl-1-pentene, 1-heptene, and 1-octene, vinyl esters such as vinyl acetate and vinyl propionate, unsaturated carboxylic acid esters such as methyl acrylate, ethyl acrylate, methyl methacrylate, and ethyl methacrylate, and unsaturated compounds such as conjugated dienes and non-conjugated dienes. The content of the ethylene unit in the polyethylene resin may be 50% by mass or more based on the total amount of monomer units.

The content of the thermoplastic resin may be 70% by mass or more based on the total amount of the film.

The blue colorant is, for example, a colorant in which the maximum absorption wavelength in the visible light region (380 to 750 nm) is present at 600 to 750 nm. It is preferable that the absorbance at the maximum absorption wavelength in the visible light region of the blue colorant be at least 2 times, and more preferably at least 3 times, the absorbance at 470 nm. Specifically, the blue colorant may be copper phthalocyanine (copper phthalocyanine blue), hexacyanoferrate(II) iron(III) oxide, a cobaltous oxide-aluminum oxide mixture, indigo, or ultramarine. These blue colorants are used singly or in combination of two or more kinds. From the viewpoint of dispersibility, the blue colorant is preferably copper phthalocyanine.

The content of the blue colorant may be 0.5% by mass or more, and 2.0% by mass or less, based on the total amount of the film.

The polyglycerol fatty acid ester is a compound represented by the following formula (1).

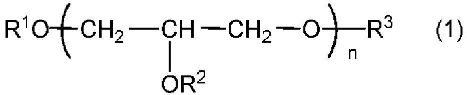

In formula (1), R¹, R², and R³ each independently represent a hydrogen atom or a fatty acid residue (alkylcarbonyl group), and at least one of R¹, R², and R³ represents a fatty acid residue (alkylcarbonyl group). A portion of the fatty acid residue (alkylcarbonyl group) may be substituted with a hydroxyl group or the like. The symbol n represents an integer of 3 or more. A plurality of R²s may be the same as or different from each other. These polyglycerol fatty acid esters may be used alone or in combination of two or more.

The number of carbon atoms of the fatty acid constituting the polyglycerol fatty acid ester may be, for example, 8 to 24. The fatty acid constituting the polyglycerol fatty acid ester may be a saturated fatty acid or an unsaturated fatty acid. Examples of saturated fatty acids constituting the polyglycerol fatty acid ester include caprylic acid, pelargonic acid, capric acid, undecylic acid, lauric acid, tridecylic acid, myristylic acid, pentadecylic acid, palmitic acid, margaric acid, stearic acid, nonadecylic acid, arachidic acid, heneicosylic acid, behenic acid, tricosylic acid, and lignoceric acid. Examples of unsaturated fatty acids constituting the polyglycerol fatty acid ester include α-linolenic acid, stearidonic acid, eicosapentaenoic acid, docosapentaenoic acid, docosahexaenoic acid, linoleic acid, γ-linolenic acid, dihomo-γ-linolenic acid, arachidonic acid, docosapentaenoic acid, palmitoleic acid, vaccenic acid, bauric acid, oleic acid, elaidic acid, erucic acid, and nervonic acid. A part of these saturated fatty acids and unsaturated fatty acids may be substituted with hydroxyl groups or the like. Examples of compounds in which a part of the fatty acid is substituted with a hydroxyl group include ricinoleic acid, linoleic acid, linolenic acid, sardine acid, and eleostearic acid.

The symbol n may be an integer from 3 to 20. The polyglycerol fatty acid ester may be a mixture of two or more kinds of polyglycerol fatty acid esters each having a different n.

From the viewpoint of even better dispersibility of the blue colorant, the content of the polyglycerol fatty acid ester is preferably 0.5% by mass or more, more preferably 1.0% by mass or more, and further preferably 1.5% by mass or more, based on the total amount of the film. The content of the polyglycerol fatty acid ester may be 2.5% by mass or less, or 2.0% by mass or less, based on the total amount of the film.

In addition to the thermoplastic resin, the blue colorant, and the polyglycerol fatty acid ester, the film may further contain other components. Examples of other components include a thermal stabilizer, a light stabilizer, an anti-fogging agent other than the polyglycerol fatty acid ester, a lubricant, a filler, a plate-out inhibitor, an antioxidant, a release agent, a viscosity lowering agent, a surfactant, a coloring agent other than the blue colorant, a fluorescent agent, a surface treatment agent, a crosslinking agent, a processing aid, a pressure-sensitive adhesive, an antistatic agent, an ultraviolet absorber, and an antiblocking agent.

The film consists of a single layer containing the thermoplastic resin, the blue colorant and the polyglycerol fatty acid ester.

The thickness of the film is preferably 5 µm or more, and more preferably 6 µm or more, and further is preferably 12 µm or less, and more preferably 10 µm or less.

The film is manufactured by, for example, extrusion molding a composition containing the thermoplastic resin, the blue colorant, and the polyglycerol fatty acid ester. Specifically, the target film is obtained by feeding that composition into the hopper of the extruder, and employing an inflation method, a T-die method, or the like. In general, the film is wound while the film is being produced, and an article containing a box and the film therein is obtained by further rewinding the wound film into a desired length, such as 20 m or 50 m, and packing the rewound film into the box.

The thus-obtained film may be subjected to, depending on an objective such as reducing thermal shrinkage, natural shrinkage, and the like, and suppressing the occurrence of width shrinkage and the like, longitudinal drawing between heating rolls, and various heat treatments such as heat-setting and aging, and also subjected to treatments such as corona treatment and aging, surface treatments such as printing and coating, and surface processing in order to impart and promote an anti-fogging property, an antistatic property, a pressure-sensitive adhesion property, and the like.

### Examples

The present invention will now be described more specifically with reference to examples, however, is not limited to the examples.

Resin compositions having the compositions shown in Tables 1 and 2 were prepared using the following thermoplastic resins, blue colorant, anti-fogging agents, and various kinds of additives, and each resin composition was extruded by a T-die extruder to produce an 8 µm-thick film.

| | |
|---|---|
| Thermoplastic resin a1: | Polyvinyl chloride resin (average polymerizationdegree: 1000) |
| Thermoplastic resin a2: | Polyethylene resin |
| Blue colorant b1: | Copper phthalocyanine (copper phthalocyanineblue) |
| Anti-fogging agent c1: | Polyglycerol fatty acid ester (polyglycerol polyricinoleate, mixture in which n in formula (1) is 4 to 6) |
| Anti-fogging agent c2: | Diglycerol fatty acid ester (diglycerol oleate) |
| Anti-fogging agent c3: | Glycerol fatty acid ester (glycerin molooleate) |
| Anti-fogging agent c4: | Sorbitan fatty acid ester (sorbitan laurate) |
| Additive d1: | Dioctyl adipate |
| Additive d2: | Epoxidized soybean oil |
| Additive d3: | Ca/Zn stabilizer |

### (Evaluation of Dispersibility)

Each of the obtained films was visually observed, and the dispersibility of the blue colorant was evaluated. The evaluation criteria are as shown below. The results are shown in Tables 1 and 2. Note that an evaluation of A, B, or C indicates excellent dispersibility.
- A:: Blue colorant is very uniformly dispersed in the film.
- B:: Blue colorant is uniformly dispersed in the film.
- C:: Blue colorant is almost uniformly dispersed in the film.
- D:: Blue colorant is present non-uniformly in the film.

**[Table 1]**

| | | Example 1 | Example 2 | Example 3 | Example 4 | Example 5 | Example 6 | Example 7 |
|---|---|---|---|---|---|---|---|---|
| Composition (% by mass) | a1 | 75.0 | 75.0 | 75.0 | 75.0 | 75.0 | - | - |
| | a2 | - | - | - | - | - | 97.0 | 98.3 |
| | b1 | 1.0 | 1.0 | 1.0 | 1.0 | 1.0 | 1.0 | 1.0 |
| | c1 | 2.0 | 1.0 | 1.0 | 1.0 | 0.5 | 2.0 | 0.5 |
| | c2 | - | 1.0 | - | - | 0.1 | - | 0.1 |
| | c3 | - | - | 1.0 | - | 0.1 | - | 0.1 |
| | c4 | - | - | - | 1.0 | - | - | - |
| | d1 | 12.0 | 12.0 | 12.0 | 12.0 | 12.0 | - | - |
| | d2 | 9.0 | 9.0 | 9.0 | 9.0 | 10.3 | - | - |
| | d3 | 1.0 | 1.0 | 1.0 | 1.0 | 1.0 | - | - |
| Dispersibility | | A | B | B | B | C | B | C |

**[Table 2]**

| | | Comparative Example 1 | Comparative Example 2 | Comparative Example 3 | Comparative Example 4 |
|---|---|---|---|---|---|
| Composition (% by mass) | a1 | 75.0 | 77.0 | 77.0 | - |
| | a2 | - | - | - | 98.0 |
| | b1 | 1.0 | 1.0 | 1.0 | 1.0 |
| | c1 | - | - | - | - |
| | c2 | 0.4 | - | - | 0.5 |
| | c3 | 0.4 | 0.6 | - | 0.5 |
| | c4 | 0.2 | 0.6 | 2.0 | - |
| | d1 | 12.0 | 10.0 | 10.0 | - |
| | d2 | 10.0 | 10.0 | 9.0 | - |
| | d3 | 1.0 | 1.0 | 1.0 | - |
| Dispersibility | | D | D | D | D |

## Claims

1. An article comprising:
a box; and
a food wrapping film in the box,
wherein the food wrapping film consists of a single layer comprising:
a thermoplastic resin;
a blue colorant; and
a polyglycerol fatty acid ester.

2. The article according to claim 1, wherein the content of the polyglycerol fatty acid ester is 0.5% by mass or more based on the total amount of the film.

3. The article according to claim 1 or 2, wherein the thermoplastic resin is at least one selected from the group consisting of a polyvinyl chloride resin, a polyethylene resin, a polypropylene resin, a polystyrene resin and a polyester resin.

4. The article according to any one of claims 1 to 3, wherein the blue colorant is at least one selected from the group consisting of copper phthalocyanine, hexacyanoferrate(II) iron(III) oxide, a cobaltous oxide-aluminum oxide mixture, indigo and ultramarine.

## Patentansprüche

1. Gegenstand, umfassend:
ein Behältnis; und
eine Lebensmittelverpackungsfolie in dem Behältnis,
wobei die Lebensmittelverpackungsfolie aus einer einzelnen Schicht besteht, die umfasst:
ein thermoplastisches Harz;
ein blaues Farbmittel; und
einen Polyglycerin-Fettsäureester.

2. Gegenstand gemäß Anspruch 1, wobei der Gehalt des Polyglycerin-Fettsäureesters 0,5 Masse-% oder mehr beträgt, basierend auf der Gesamtheit des Films.

3. Gegenstand gemäß Anspruch 1 oder 2, wobei das thermoplastische Harz mindestens eines, ausgewählt aus der Gruppe, bestehend aus einem Polyvinylchloridharz, einem Polyethylenharz, einem Polypropylenharz, einem Polystrolharz und einem Polyesterharz, ist.

4. Gegenstand gemäß einem der Ansprüche 1 bis 3, wobei das blaue Farbmittel mindestens eines, ausgewählt aus der Gruppe, bestehend aus Kupferphthalocyanin, Hexacyanoferrat(II)Eisen(III)oxid, einer Kobalt(II)oxid-Aluminiumoxid-Mischung, Indigo und Ultramarin, ist.

## Revendications

1. Article comprenant :
une boîte; et
un film d'emballage alimentaire dans la boîte,
dans lequel le film d'emballage alimentaire consiste en une seule couche comprenant :
une résine thermoplastique ;
un colorant bleu; et
un ester d'acide gras polyglycérol.

2. L'article selon la revendication 1, dans lequel la teneur de l'ester d'acide gras polyglycérol est de 0,5% en masse ou plus sur la base de la quantité totale du film.

3. L'article selon la revendication 1 ou 2, dans lequel la résine thermoplastique est au moins l'une choisie parmi le groupe constitué d'une résine chlorure de polyvinyle, une résine polyéthylène, une résine polypropylène, une résine polystyrène et un résine polyester.

4. L'article selon l'une quelconque des revendications 1 à 3, dans lequel le colorant bleu est au moins l'un choisi parmi le groupe constitué de phtalocyanine de cuivre, d'hexacyanoferrate (II), d'oxyde de fer (III), d'un mélange d'oxyde oxyde-aluminium cobalteux, de l'indigo et de l'ultramarine.
